# EUROPÄISCHE PATENTSCHRIFT

(11) **EP 2 126 388 B1**
(45) Veröffentlichungstag und Bekanntmachung des Hinweises auf die Patenterteilung: **09.11.2011**
(21) Anmeldenummer: 08707645.1
(22) Anmeldetag: 11.02.2008
(51) Int. Cl.: F16C 23/08, F16C 19/38, F16C 19/36, F16C 33/58

(54) **WÄLZLAGER**
ROLLER BEARING
PALIER A ROULEMENT

(30) Priorität: 23.02.2007 DE 102007009436; 04.05.2007 DE 102007021523
(43) Veröffentlichungstag der Anmeldung: 02.12.2009
(73) Patentinhaber: Jacob, Werner, 60598 Frankfurt (DE)
(72) Erfinder: JACOB, Martin, D., 61350 Bad Homburg (DE)
(74) Vertreter: KEIL & SCHAAFHAUSEN Patentanwälte
(86) Internationale Anmeldenummer: PCT/EP2008/001006
(87) Internationale Veröffentlichungsnummer: WO 2008/101606

(56) Entgegenhaltungen:
- DE-A1- 3 904 456
- DE-A1- 4 240 770
- DE-C- 462 623
- FR-A- 2 192 645

## Beschreibung

Die Erfindung betrifft ein Wälzlager mit einem eine Lagerachse definierenden Innenring und einem Außenring, die jeweils Laufbahnen bilden, und mehreren zwischen diesen angeordneten Wälzkörpern, wobei das Wälzlager als ein einseitig belastbares Tonnenschräglager ausgebildet ist.

Zur Aufnahme kombinierter radialer und axialer Belastungen ist der Einsatz von Kegelrollenlagern bekannt Kegelrollenlager weisen dabei den Nachteil auf, dass sie sehr empfindlich gegen Kantenspannung sind, die bei einem Verkanten der Kegelrollenlager auftreten, wodurch sehr hohe Lasten an den einander gegenüberliegenden Enden der Kegelrollen auftreten können. Zudem treten bei Kegelrollenlager an einer Stirnseite der Kegelrollen bei axialer Belastung hohe Reibungsverluste auf, die ebenfalls als nachteilig empfunden werden.

Ein solches Lager mit hoher Reibung an den Stirnseiten der Wälzkörper ist aus der DE 462 623 C bekannt. Diese beschreibt eine selbsteinstellende Schrägrollenlagerung mit einer hohlkugeligen Außenlaufbahn und einer hohlgekrümmten Innenlaufbahn, zwischen denen längliche Wälzkörper laufen, deren Außenmantelfläche schräg tonnenförmig ausgebildet ist. Das vordere und das hintere Ende des Wälzkörpers sind flächig ausgebildet, wobei die Endflächen senkrecht zur Längsachse des Wälzkörpers ausgerichtet sind. Der Wälzkörper liegt an der Außenlaufbahn an zwei Kontaktpunkten seiner Mantelfläche an. Die Innenlaufbahn weist eine nutartige Freistellung auf, die beidseitig durch seitlichen Absätze bzw. Stufen begrenzt wird, wobei der der Wälzkörper über seine Borde an den Absätzen geführt wird.

Weiter ist es bekannt, Tonnenlager einzusetzen, die zwar für die Aufnahme hoher radialer Tragkräfte geeignet sind, die jedoch nur eine geringe axiale Belastbarkeit haben. Aus der DE 39 04 456 C2 ein Gelenklager bekannt, bei welchem ein im Wesentlichen tonnenförmiger Wälzkörper, dessen Außenfläche durch einen zylindrischen Abschnitt und zwei durch Radien um unterschiedliche Punkte definierten Tragabschnitte aufweist. Die Laufbahn des Innenrings und die Laufbahn des Außenrings sind dabei in Längsschnitt jeweils als Kreisbogen ausgebildet, so dass das Gelenklager eine Kippbewegung des Innenrings relativ zu dem Außenring ausführen kann. Anders als Schräglager ist dieses Gelenklager jedoch nicht zur Aufnahme kombinierter Lasten geeignet.

Zur Aufnahme kombinierter Belastungen wurde bspw. in der EP 1 105 662 B2 ein Doppelschrägkugellager vorgeschlagen, welches die oben genannten Nachteile weitgehend beseitigt. Diese Doppelschrägkugellager werden mit großem Erfolg im Automobilbereich eingesetzt. Da die Tragzahlen der Doppelschrägkugellager jedoch beschränkt sind, eignen sie sich nur bedingt für den Einsatz für Lastkraftwagen, landwirtschaftlichen Fahrzeugen, Omnibussen oder dem Schiffsbau. Zudem besteht die Forderung, die Reibungsverluste von Lagern weiter zu minimieren.

Der Erfindung liegt die Aufgabe zugrunde, ein Wälzlager der eingangs genannten Art bereitzustellen, welches zur Aufnahme auch hoher kombinierter Lasten geeignet ist und bei geringer Kantenempfindlichkeit auch eine möglichst niedrige Reibung aufweist.

Diese Aufgabe wird erfindungsgemäß mit einem Wälzlager nach Anspruch 1 gelöst. Dabei wird es bevorzugt, wenn die Schmiegungskontaktpunkte außerhalb des Selbsthemmungsbereichs liegen. Dies kann dadurch erreicht werden, dass die Schmiegungskontaktpunkte auf einem Schmiegungskreisbogen bspw. der Tonnen um einen größer als der Selbsthemmungsbereich, also bspw. etwa 7°, liegenden Winkel zu der senkrecht auf der Rotationsachse der Tonnen stehenden Mittelebene versetzt sind.

Unter einem Tonnenschräglager wird erfindungsgemäß ein Lager verstanden, bei welchem die Rotationsachsen der Wälzkörper in einem beliebigen Winkel zu der Lagerachse geneigt sind. Mit dem erfindungsgemäßen Tonnenschräglager werden die Vorteile eines Tonnenlagers, welches eine geringere Kantenempfindlichkeit sowie ein geringeres Risiko für Reibungsverluste an Borden bei axialen Belastungskomponenten aufweist, mit den Vorteilen eines Kegelrollenlagers, welches hohe Tragfähigkeit bei kombinierten Belastungen aufweist, miteinander kombiniert.

Eine besonders geringe Reibung kann dadurch erzielt werden, dass die Berührungstangenten der Schmiegungskontaktpunkte an der Laufbahn des Innenrings und die Berührungstangenten der Schmiegungskontaktpunkte an der Laufbahn des Außenrings sich in einem Punkt auf der Lagerachse schneiden. Dies wird erfindungsgemäß durch die Ausbildung der Wälzkörper als Kegeltonnen erreicht. Mit anderen Worten ist der Abstand der Schmiegungskontaktpunkte der Kegeltonnen mit dem Außenring und dem Innenring auf der näher an der Lagerachse gelegenen Seite kleiner als der Abstand der Schmiegungskontaktpunkte der Kegeltonnen mit dem Außenring und dem Innenring auf der der Lagerachse entfernteren Seite des Wälzlagers. Bei dieser Anordnung, bei der sich die Berührungstangenten der Schmiegungskontaktpunkte in einem Punkt auf der Lagerachse schneiden, führen die Kegeltonnen im Betrieb eine reine Rollbewegung und keine Bohrbewegung aus.

Nach einer bevorzugten Ausführungsform der Erfindung wird die Außenmantelfläche der Wälzkörper im Längsschnitt entlang der Lagerachse durch einen Kreisabschnitt mit konstantem Radius gebildet. Die Außenmantelfläche setzt sich also nicht wie bei der Tonne nach der DE 39 04 456 C2 aus einem mittleren zylindrischen Abschnitt und zwei durch Kreisbögen gebildeten Schmiegungsbereichen mit unterschiedlichen Krümmungsmittelpunkten zusammen, sondern durch eine einzige Kreisbogenfläche. Der Mittelpunkt des Kreises, welcher die Außenfläche der Wälzkörper definiert, liegt dabei nicht auf der senkrecht zu der Rotationsachse der Wälzkörper stehenden Ebene. Vielmehr ist der Mittelpunkt des die Außenfläche der Wälzkörper definierenden Kreises in einer senkrecht zur Berührungstangente der Schmiegungskontaktpunkte an der Laufbahn des Außenring bzw. des Innenrings liegenden Ebene angeordnet.

Erfindungsgemäß werden die Laufbahnen des Innenrings und des Außenrings jeweils durch zwei Schmiegungsbereiche gebildet, die im Längsschnitt entlang der Lagerachse jeweils durch einen Kreisabschnitt mit konstantem Radius gebildet werden. Die beiden Kreisabschnitte, welche die Schmiegungsbereiche definieren, haben dabei voneinander beabstandete Krümmungsmittelpunkte, die auch von dem die Außenmantelfläche der Wälzkörper definierenden Krümmungsmittelpunkt verschieden sind.

Erfindungsgemäß ist der die Außenmantelfläche der Wälzkörper definierende Radius kleiner als der die Schmiegungsbereiche definierende Radius.

Das erfindungsgemäße Tonnenschräglager weist somit vier Schmiegungsbereiche auf, von denen zwei Schmiegungsbereiche in dem Außenring und zwei Schmiegungsbereiche in dem Innenring liegen, wobei jeder der vier Schmiegungsbereiche einen Schmiegungskontaktpunkt aufweist, an welchem ein vorzugsweise als Kegeltonne ausgebildeter Wälzkörper an dem Innenring oder dem Außenring anliegt. Betrachtet man den kompletten Innenring bzw. den kompletten Außenring, so ist in jedem der vier Schmiegungsbereiche eine umlaufende Linie vorhanden, auf der die Schmiegungskontaktpunkte mit einem Wälzkörper liegen.

Um die Axialkräfte der Kegeltonnen selbsthemmungsfrei aufzunehmen, ist in jeder der Laufbahnen im Selbsthemmungsbereich zwischen den beiden Schmiegungsbereichen jeweils eine Entlastungsrille vorgesehen. Dieses Entlastungsrille, welche den Selbsthemmungsbereich abdeckt, verhindert, dass die Wälzkörper in dem Selbsthemmungsbereich mit den Laufbahnen in Kontakt treten können.

Erfindungsgemäß sind die Wälzkörper in einem Käfig parallel zueinander und in einer definierten Ausrichtung zu der Lagerachse geführt. Hierzu kann der Käfig bspw. in einer nutartigen Käfigführung auf dem Innenring des Wälzlagers gehalten sein.

Der Käfig kann dabei Fenster zur Aufnahme der Wälzkörper und Haltenasen derart aufweisen, dass die Wälzkörper drehbar in dem Käfig fixiert sind. Der Käfig ist dabei vorzugsweise so ausgebildet, dass möglichst geringe Reibungskräfte zwischen dem Käfig und den Wälzkörpern auftreten.

Es wird bevorzugt, wenn das Verhältnis von Durchmesser zur Länge der Wälzkörper kleiner als etwa 1:1,5, insbesondere kleiner als etwa 1:2 ist. Mit anderen Worten soll die Länge der Wälzkörper im Verhältnis zu ihrem Durchmesser größer werden.

Die erfindungsgemäßen Wälzlager können auch als zweireihige Lager ausgebildet sein. So ist bspw. für den Einsatz in einem Radsatz für Schienenfahrzeuge ein zweireihiges Kegeltonnenschräglager geeignet, bei welchem die Kegeltonnen in O-Anordnung vorgesehen sind. Vorzugsweise sind bei einem zweireihigen Kegeltonnenschräglager der Außenring oder der Innenring einstückig ausgebildet. Die Kegeltonnen können dabei in einem Käfig, vorzugsweise aus Polymer, aufgenommen sein.

Die Erfindung betrifft weiter eine Lageranordnung mit wenigstens zwei voneinander beabstandeten und axial vorgespannten Wälzlagern der oben genannten Art. Die Wälzlager können dabei bspw. in O-Anordnung oder in X-Anordnung vorgesehen sein.

Die erfindungsgemäßen Wälzlager eignen sich für verschiedene Anwendungszwecke. So können diese bspw. in Personenkraftwagen, Lastkraftwagen, Bussen sowie Schienenfahrzeugen, Land- oder Baumaschinen eingesetzt werden. Ein möglicher Anwendungsbereich ist bspw. ein Getriebe, insbesondere ein Verteilergetriebe in einem Fahrzeug, welches wenigstens ein Wälzlager der oben genannten Art aufweist. Besonders bevorzugt weist das Getriebe eine Lageranordnung mit zwei voneinander beabstandeten und axial vorgespannten erfindungsgemäßen Wälzlagern auf. Die Erfindung ist dabei nicht auf den Einsatz der Wälzlager in den oben genannten Anwendungsbereichen beschränkt, vielmehr eignen sich die erfindungsgemäßen Wälzlager zum Einsatz in weiteren Anwendungsbereichen, insbesondere wenn hohe kombinierte Lasten aufgenommen werden sollen und möglichst geringe Lagerreibung gewünscht ist.

Die Erfindung wird nachfolgend anhand von Ausführungsbeispielen und unter Bezugnahme auf die Zeichnung näher erläutert. Es zeigen:
- Fig. 1: im Schnitt ein Wälzlager nach einer ersten Ausführungsform der Erfindung,
- Fig. 2: im Schnitt ein Wälzlager nach einer zweiten Ausführungsform der Erfindung,
- Fig. 3: im Schnitt ein Wälzlager nach Fig. 2, bei welchem der Außenring von dem Innenring entfernt wurde,
- Fig. 4: ein Anwendungsbeispiel für Wälzlager nach Fig. 2 und
- Fig. 5: im Schnitt ein zweireihiges Wälzlager nach einer weiteren Ausführungsform der Erfindung.

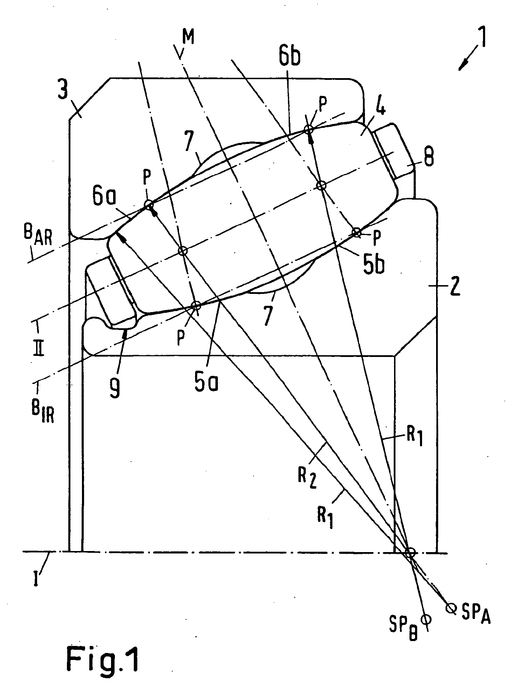

In Fig. 1 ist ein als einseitig belastbares Tonnenschräglager ausgebildetes Wälzlager 1 dargestellt, welches durch einen Innenring 2, einen Außenring 3 und zwischen dem Innenring 2 und dem Außenring 3 aufgenommene Wälzkörper 4 gebildet ist. Durch den Innenring 2 wird eine Lagerachse 1 definiert, zu welcher der Innenring 2 und der Außenring 3 vorzugsweise rotationssymmetrisch aufgebaut sind. Die Rotationsachsen 11, um welche sich die Wälzkörper 4 im Betrieb drehen, verlaufen schräg zu der Lagerachse 1.

In dem Innenring 2 und dem Außenring 3 sind einander zugewandte Laufbahnen ausgebildet, in welchen die Wälzkörper 4 abrollend geführt sind. Die Laufbahn des Innenrings 2 ist in zwei Schmiegungsbereiche 5a und 5b unterteilt und die Laufbahn des Außenrings 3 ist in zwei Schmiegungsbereiche 6a und 6b unterteilt. Die Schmiegungsbereiche sind in dem Längsschnitt nach Fig. 1 jeweils als Kreisbogenabschnitte ausgebildet, die durch den jeweils gleichen Radius R₁ definiert sind. Die Krümmungsmittelpunkte SP_{A} und SP_{B} sind dabei versetzt zueinander angeordnet und liegen außerhalb der senkrecht auf der Rotationsachse 11 stehenden Mittelebene M des Wälzkörpers 4.

In jeder Laufbahn ist im Selbsthemmungsbereich zwischen den beiden Schmiegungsbereichen 5a, 5a und 6a, 6b jeweils eine Entlastungsrille 7 ausgebildet. Dies bewirkt, dass sich die Wälzkörper 4 nicht im Selbsthemmungsbereich an die Schmiegungsbereiche der Laufbahnen anlegen.

Der tonnenrollenartige Wälzkörper 4 weist eine Außenmantelfläche zur Anlage an die Laufbahnen des Innenrings 2 und des Außenrings 3 auf, wobei diese Außenmantelfläche im Längsschnitt nach Fig. 1 ebenfalls durch einen Kreisbogenabschnitt definiert wird. Der Krümmungsmittelpunkt SP liegt dabei auf der Mittelebene M und der Lagerachse I. Der Krümmungsradius R₂ für die Außenmantelfläche ist dabei kleiner als der Radius R₁, welcher die Krümmung der Schmiegungsbereiche definiert.

Auf diese Weise wird in jedem der Schmiegungsbereiche 5a, 5b und 6a, 6b ein Schmiegungskontaktpunkt P gebildet, mit welchem jeder der Wälzkörper 4 an dem Innenring 2 und dem Außenring 3 anliegt. Zieht man durch die beiden Schmiegungskontaktpunkte an dem Innenring 2 und die beiden Schmiegungskontaktpunkte an dem Außenring 3 jeweils eine Berührungstangente (Linien B_{IR} und B_{AR} in Fig. 1), so verlaufen diese Berührungstangenten bei dem tonnenrollenartigen Wälzkörper 4 nach Fig. 1 parallel zueinander und parallel zu der Rotationsachse 11.

Die Wälzkörper 4 sind in der in Fig. 1 gezeigten Ausführungsform in einem Käfig 8 parallel zueinander und in einer definierten Ausrichtung zu der Lagerachse 1 geführt. Hierzu ist der Käfig in einer nutartigen Käfigführung 9 auf dem Innenring 2 gehalten.

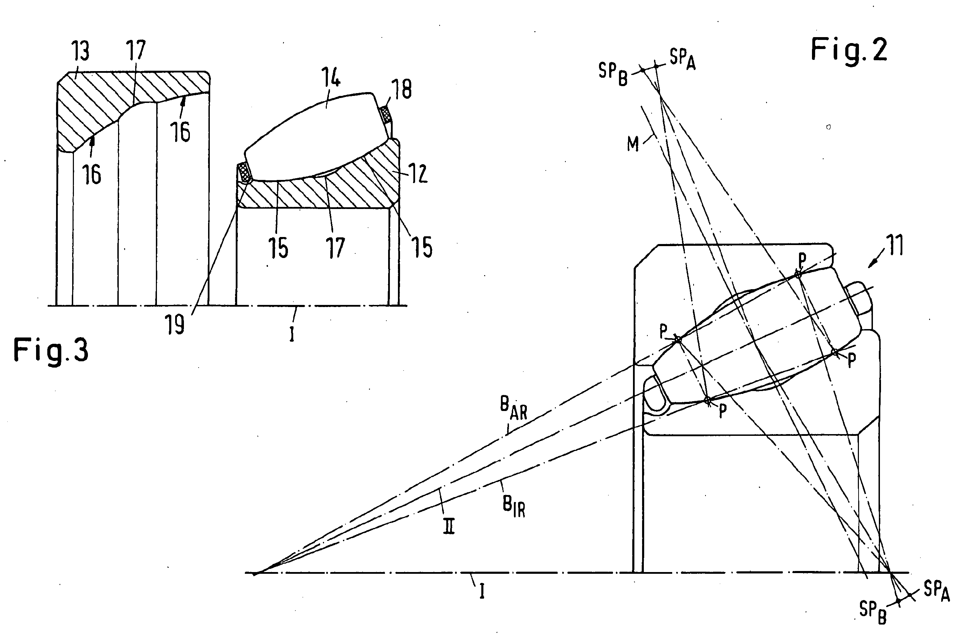

In Fig. 2 ist eine zweite Ausführungsform der Erfindung dargestellt, wobei die in Bezug auf Fig. 1 gleichen Bauteile in Fig. 2 durch Voranstellung einer "1" gekennzeichnet sind.

Das Wälzlager 11 nach Fig. 2 ist als ein einseitig belastbares Kegeltonnenschräglager ausgebildet, bei welchem die Wälzkörper 14 nicht als Tonnenrollen sondern als Kegeltonnen ausgestaltet sind. Dabei wird die Außenmantelfläche der Wälzkörper 14 im Längsschnitt nach Fig. 2 wiederum durch einen Kreisabschnitt definiert, welcher entlang eines konstanten Radius R₂ um einen Krümmungsmittelpunkt, der auf der Lagerachse 1 liegt, gebildet ist.

Auch die Schmiegungsbereiche 15a, 15b und 16a, 16b in den Laufbahnen des Innnenrings 12 und des Außenrings 13 sind durch Kreisbogenabschnitte mit einem konstanten Krümmungsradius und auseinanderliegenden Krümmungsmittelpunkten definiert.

Durch die kegelige Ausgestaltung des Wälzkörpers 14 verlaufen die Berührungstangenten B_{IR} und B_{AR} der Schmiegungskontaktpunkte P bei der Ausführungsform nach Fig. 2 jedoch nicht parallel zu der Rotationsachse 11 des Wälzkörpers 14, sondern treffen sich mit der Rotationsachse 11 in einem Punkt auf der Lagerachse I. Hierdurch wird erreicht, dass die Kegeltonnen 14 im Betrieb eine reine Rollbewegung ausführen, ohne dass es zu einer mit Reibverlusten verbundenen Bohrbewegung kommt.

Aus Fig. 3 ist ersichtlich, dass die Kegeltonnen 14 nach der Ausführungsform nach Fig. 2 über einen Käfig 18 auf dem Innenring 12 geführt sind, während der Außenring 13 von den Kegeltonnen 14 entfernbar ist.

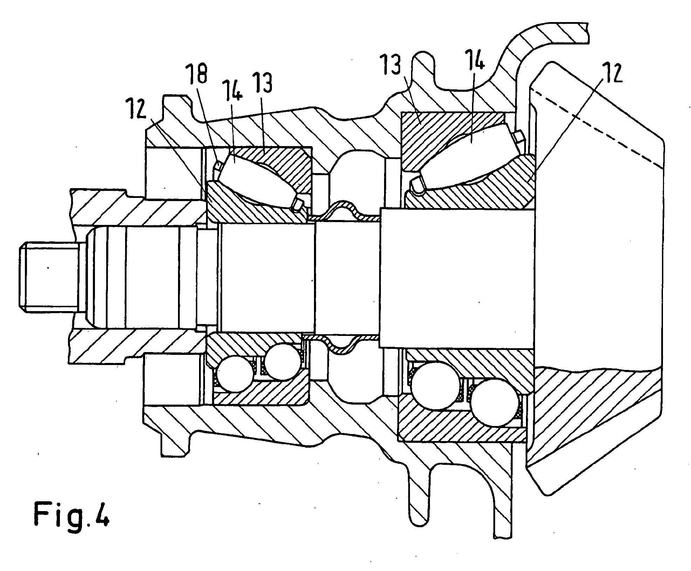

In Fig. 4 ist in der oberen Hälfte als ein Anwendungsbeispiel für ein Kegeltonnenschräglager 11 nach Fig. 2 die Anordnung von zwei Wälzlagern 11 in einem Verteilergetriebe dargestellt. In der unteren Hälfte ist zum Vergleich eine bekannte Lageranordnung mit Doppelschrägkugellagern gezeigt.

Die beiden Wälzlager 11 sind dabei axial, d.h. in Richtung der Lagerachse I gegeneinander vorgespannt. In der Ausführungsform nach Fig. 4 sind die beiden Wälzlager 11 in O-Anordnung vorgesehen. Es ist jedoch auch möglich, Wälzlager 1 bzw. 11 in X-Anordnung vorzusehen, wo dies erforderlich erscheint.

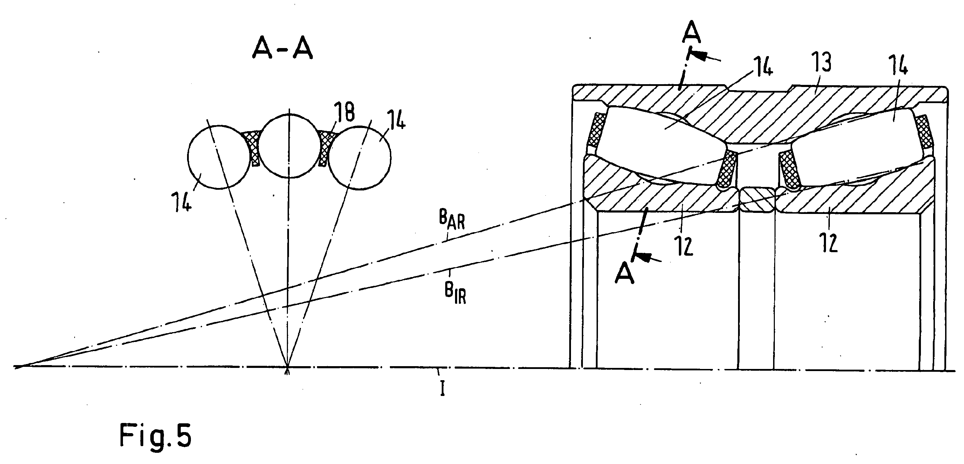

Eine weitere Ausführungsform der Erfindung ist in Fig. 5 dargestellt, die ein zweireihiges Kegeltonnenschräglager zeigt. Dieses insbesondere für die Verwendung in einem Radsatz für Schienenfahrzeuge geeignete zweireihige Kegeltonnenschräglager ist derart ausgebildet, dass die Kegeltonnen 14 in O-Anordnung vorgesehen sind. In anderen Anwendungsfällen kann alternativ auch eine X-Anordnung zweckmäßig sein.

Während in der dargestellten Ausführungsform für jede Kegeltonne 14 ein eigener Innenring 12 vorgesehen ist, der sich über eine Zwischenhülse an dem jeweils anderen Innenring 12 abstützt, ist der Außenring 13 als ein einstückiger Außenring für beide Kegeltonnen 14 ausgebildet. Alternativ hierzu kann auch der Innenring einstückig ausgebildet sein. Vorzugsweise sind die Kegeltonnen 14 in einem Polymer-Käfig 18 gehalten.

### Bezugszeichenliste:

- 1, 11: Wälzlager
- 2, 12: Innenring
- 3,13: Außenring
- 4, 14: Wälzkörper
- 5a, 5b, 6a, 6b: Schmiegungsbereiche
- 15, 16: Schmiegungsbereiche
- 7, 17: Entlastungsrille
- 8, 18: Käfig
- 9, 19: Käfigführung

- I: Lagerachse
- II: Rotationsachse
- B_{IR}: Berührungstangente Innenring
- B_{AR}: Berührungstangente Außenring
- P: Schmiegungskontaktpunkt
- M: Mittelebene
- SP_{A}, SP_{B}: Krümmungsmittelpunkt für Schmiegungsbereich
- R₁: Krümmungsradius für Schmiegungsbereich
- R₂: Krümmungsmittelpunkt für Wälzkörperaußenfläche

## Patentansprüche

1. Wälzlager mit einem eine Lagerachse (1) definierenden Innenring (2, 12) und einem Außenring (3, 13), die jeweils Laufbahnen bilden, in denen die Wälzkörper (4, 14) mit einer Rotationsachse (11) abrollend geführt sind, und mehreren zwischen diesen angeordneten Wälzkörpern (4, 14), wobei die Geometrie der Wälzkörper (4, 14) und der Laufbahnen derart aneinander angepasst ist, dass das Wälzlager (1, 11) ein einseitig belastbares Tonnenschräglager bildet, bei dem die als Tonnen (4, 14) ausgebildeten Wälzkörper jeweils an zwei vorzugsweise außerhalb des Selbsthemmungsbereichs liegenden Schmiegungskontaktpunkten (P) an der Laufbahn des Innenrings (2, 12) und des Außenrings (3, 13) anliegen, wobei die Laufbahnen des Innenrings (2, 12) und des Außenrings (3, 13) jeweils durch zwei Schmiegungsbereiche (5a, 5b, 6a, 6b, 15a, 15b, 16a, 16b) gebildet werden, die im Längsschnitt entlang der Lagerachse (1) jeweils durch einen Kreisabschnitt mit konstantem Radius (R₁) gebildet werden, **dadurch gekennzeichent, dass** deren Krümmungsmittelpunkte (SP_{A}, SP_{B}) versetzt zueinander angeordnet sind und außerhalb der senkrecht auf der Rotationsachse (11) stehenden Mittelebene (M) des Wälzkörpers (4, 14) liegen.

2. Wälzlager nach Anspruch 1, **dadurch gekennzeichnet, dass** die Wälzkörper derart als Kegeltonnen (14) ausgebildet sind, dass die Berührungstangenten (B_{IR}) der Schmiegungskontaktpunkte (P) an der Laufbahn des Innenrings (12) und die Berührungstangenten (B_{AR}) der Schmiegungskontaktpunkte (P) an der Laufbahn des Außenrings (13) sich in einem Punkt auf der Lagerachse (1) schneiden.

3. Wälzlager nach Anspruch 1 oder 2, **dadurch gekennzeichnet, dass** die Außenmantelfläche der Wälzkörper (4, 14) im Längsschnitt entlang der Lagerachse (1) durch einen Kreisabschnitt mit konstantem Radius (R₂) gebildet wird.

4. Wälzlager nach einem der vorhergehenden Ansprüche, **dadurch gekennzeichnet, dass** der die Außenmantelfläche der Wälzkörper (4, 14) definierende Radius (R₂) kleiner als der die Schmiegungsbereiche definierende Radius (R₁) ist.

5. Wälzlager nach einem der vorhergehenden Ansprüche, **dadurch gekennzeichnet, dass** jeder der vier Schmiegungsbereiche (5a, 5b, 6a, 6b, 15a, 15b, 16a, 16b) einen Schmiegungskontaktpunkt (P) aufweist, an welchem die Wälzkörper (4, 14) an dem Innenring (2, 12) oder dem Außenring (3, 13) anliegen.

6. Wälzlager nach einem der vorhergehenden Ansprüche, **dadurch gekennzeichnet, dass** in jeder der Laufbahnen im Selbsthemmungsbereich zwischen den beiden Schmiegungsbereichen (5a, 5b, 6a, 6b, 15a, 15b, 16a, 16b) jeweils eine Entlastungsrille (7, 17) vorgesehen ist.

7. Wälzlager nach einem der vorhergehenden Ansprüche, **dadurch gekennzeichnet, dass** die Wälzkörper (4, 14) in einem Käfig (8, 18) parallel zueinander und in einer definierten Ausrichtung zu der Lagerachse geführt sind.

8. Wälzlager nach einem der vorhergehenden Ansprüche, **dadurch gekennzeichnet, dass** der Käfig (8, 18) in einer nutartigen Käfigführung (9, 19) auf dem Innenring (2, 12) gehalten ist.

9. Wälzlager nach einem der vorhergehenden Ansprüche, **dadurch gekennzeichnet, dass** der Käfig (8, 18) Fenster zur Aufnahme der Wälzkörper (4, 14) und Haltenasen derart aufweist, dass die Wälzkörper (4, 14) drehbar in dem Käfig (8, 18) fixiert sind.

10. Wälzlager nach einem der vorhergehenden Ansprüche, **dadurch gekennzeichnet, dass** das Verhältnis von Durchmesser zu Länge der Wälzkörper (4, 14) kleiner als etwa 1:1,5, insbesondere kleiner als etwa 1:2 ist.

11. Wälzlager nach einem der vorhergehenden Ansprüche, das als zweireihiges Lager ausgebildet ist.

12. Wälzlager nach Anspruch 11, **dadurch gekennzeichnet, dass** der Außenring (3, 13) oder der Innenring (2, 12) einstückig ausgebildet ist.

13. Lageranordnung mit wenigstens zwei voneinander beabstandeten und axial vorgespannten Wälzlagern (1, 11) nach einem der vorhergehenden Ansprüche.

14. Getriebe, insbesondere Verteilergetriebe in einem Fahrzeug, mit wenigstens einem Wälzlagern (1, 11) nach einem der Ansprüche 1 bis 11.

## Claims

1. A rolling bearing having an inner ring (2, 12) defining a bearing axis (I) and an outer ring (3, 13), which each form races in which the rolling bodies (4, 14) are guided in a rolling manner with an axis of rotation (II), and a plurality of rolling bodies (4, 14) arranged between the races, wherein the geometry of the rolling bodies (4, 14) and the races is matched to each other in such a manner that the rolling bearing (1, 11) forms a barrel-shaped angular contact bearing, which can be loaded on one side and in which the rolling bodies shaped like barrels (4, 14) each bear against two osculation contact points (P), which preferably lie outside the self-locking region, on the race of the inner ring (2, 12) and of the outer ring (3, 13), wherein the races of the inner ring (2, 12) and of the outer ring (3, 13) are each formed by two osculation regions (5a, 5b, 6a, 6b, 15a, 15b, 16a, 16b) which are each formed by a circular section with a constant radius (R₁) in longitudinal section along the bearing axis (I), **characterised in that** the centres of curvature (SP_{A}, SP_{S}) thereof are arranged offset with respect to each other and lie outside the centre plane (M) of the rolling body (4, 14), which plane stands vertically on the axis of rotation (II).

2. The rolling bearing according to Claim 1, **characterised in that** the rolling bodies are formed as conical barrels (14) in such a manner that the contact tangents (B_{IR}) of the osculation contact points (P) on the race of the inner ring (12) and the contact tangents (B_{AR}) of the osculation contact points (P) on the race of the outer ring (13) intersect at one point on the bearing axis (I).

3. The rolling bearing according to Claim 1 or 2, **characterised in that** the outer lateral surface of the rolling bodies (4, 14) is formed by a circular section with a constant radius (R₂) in longitudinal section along the bearing axis (I).

4. The rolling bearing according to one of the preceding claims, **characterised in that** the radius (R₂) defining the outer lateral surface of the rolling bodies (4, 14) is smaller than the radius (R₁) defining the osculation regions.

5. The rolling bearing according to one of the preceding claims, **characterised in that** each of the four osculation regions (5a, 5b, 6a, 6b, 15a, 15b, 16a, 16b) has an osculation contact point (P) at which the rolling bodies (4, 14) bear against the inner ring (2, 12) or the outer ring (3, 13).

6. The rolling bearing according to one of the preceding claims, **characterised in that** a relief channel (7, 17) is provided in the self-locking region between the two osculation regions (5a, 5b, 6a, 6b, 15a, 15b, 16a, 16b) in each of the races.

7. The rolling bearing according to one of the preceding claims, **characterised in that** the rolling bodies (4, 14) are guided in a cage (8, 18) parallel to each other and in a defined alignment to the bearing axis.

8. The rolling bearing according to one of the preceding claims, **characterised in that** the cage (8, 18) is held in a groove-like cage guide (9, 19) on the inner ring (2, 12).

9. The rolling bearing according to one of the preceding claims, **characterised in that** the cage (8, 18) has windows for receiving the rolling bodies (4, 14) and retaining tabs in such a manner that the rolling bodies (4, 14) are fixed in a rotatable manner in the cage (8, 18).

10. The rolling bearing according to one of the preceding claims, **characterised in that** the ratio of diameter to length of the rolling bodies (4, 14) is less than approximately 1:1.5, in particular less than approximately 1:2.

11. The rolling bearing according to one of the preceding claims, which is configured as a double-row bearing.

12. The rolling bearing according to Claim 11, **characterised in that** the outer ring (3, 13) or the inner ring (2, 12) is formed in one piece.

13. A bearing arrangement having at least two rolling bearings (1, 11) according to one of the preceding claims, which are spaced apart from each other and axially prestressed.

14. A transmission, in particular transfer case in a vehicle, having at least one rolling bearing (1, 11) according to one of Claims 1 to 11.

## Revendications

1. Palier à roulement comportant un anneau intérieur (2,12) définissant un axe de palier (I) et un anneau extérieur (3,13), qui forment respectivement des voies de roulement, dans lesquelles les corps de roulement (4,14) sont guidés de manière à rouler avec un axe de rotation (II), dans lequel la géométrie des corps de roulement (4,14) et des voies de roulement sont adaptées mutuellement de telle sorte que le palier à roulement (1,11) forme un palier radial à butée, à rouleaux formant rotule qui peut être sollicité d'un côté, dans lequel les corps de roulement réalisés comme des rouleaux formant rotule (4,14) viennent reposer respectivement sur deux points de contact d'osculation (P) situés de préférence à l'extérieur de la zone de blocage automatique sur la voie de roulement de la bague intérieure (2,12) et de la bague extérieure (3,13), dans lequel les voies de roulement de la bague intérieure (2,12) et de la bague extérieure (3,13) sont respectivement formées par deux zones d'osculation (5a,5b,6a,6b,15a,15b,16a,16b), qui sont formées dans la section longitudinale le long de l'axe de palier (I) respectivement par une section circulaire avec rayon constant (R₁), dont les points centraux de courbure (SP_{A}, SP_{B}) sont disposés en décalage l'un par rapport à l'autre et sont situés à l'extérieur du plan médian (M) se dressant perpendiculairement à l'axe de rotation (II) du corps de roulement (4,14).

2. Palier à roulement selon la revendication 1, **caractérisé en ce que** les corps de roulements sont réalisés comme des rouleaux formant rotule coniques (14) de telle sorte que les tangentes de contact (BIR) des points de contact d'osculation (P) se coupent sur la piste de roulement de l'anneau intérieur (12) et les tangentes de contact (BAR) des points de contact d'osculation (P) se coupent sur la voie de roulement de l'anneau extérieur (13) en un point sur l'axe de palier (I).

3. Palier à roulement selon la revendication 1 ou 2, **caractérisé en ce que** la surface de gaine extérieure des corps de roulement (4,14) est formée dans la section longitudinale le long de l'axe de palier (I) par une portion circulaire avec un rayon constant (R2).

4. Palier à roulement selon une des revendications précédentes, **caractérisé en ce que** le rayon (R2) définissant la surface de gaine extérieure des corps de roulement (4,14) est plus petit que le rayon définissant les zones d'osculation (R1).

5. Palier à roulement selon une des revendications précédentes, **caractérisé en ce que** chacune des quatre zones d'osculation (5a,5b,6a,6b,15a,15b,16a,16b) présente un point de contact d'osculation (P), sur lequel viennent reposer les corps de roulement (4,14) sur l'anneau intérieur (2,12) ou l'anneau extérieur (3,13).

6. Palier à roulement selon une des revendications précédentes, **caractérisé en ce que** dans chacune des voies de roulement dans la zone de blocage automatique entre les deux zones d'osculation (5a,5b,6a,6b,15a,15b,16a,16b), une rainure de décharge (7, 17) est respectivement prévue.

7. Palier à roulement selon une des revendications précédentes, **caractérisé en ce que** les corps de roulement (4,14) sont guidés dans une cage (8,18) parallèlement l'un à l'autre et dans un alignement défini par rapport à l'axe de palier.

8. Palier à roulement selon une des revendications précédentes, **caractérisé en ce que** la cage (8,18) est tenue dans un guidage de cage (9,19) de type encoche sur l'anneau intérieur (2,12).

9. Palier à roulement selon une des revendications précédentes, **caractérisé en ce que** la cage (8, 18) présente des fenêtres pour recevoir les corps de roulement (4,14) et des nez de retenue, de telle sorte que les corps de roulement (4,14) soient fixés rotativement dans la cage (8,18).

10. Palier à roulement selon une des revendications précédentes, **caractérisé en ce que** le rapport du diamètre sur la longueur des corps de roulement (4,14) est plus petit que environ 1 :1,5, notamment plus petit que environ 1 :2.

11. Palier à roulement selon une des revendications précédentes, qui est réalisé comme un palier à deux rangées.

12. Palier à roulement selon la revendication 11, **caractérisé en ce que** l'anneau extérieur (3,13) ou l'anneau intérieur (2,12) sont réalisés en un seul tenant.

13. Agencement de palier comportant au moins deux paliers à roulement (1,11) espacés l'un de l'autre et accouplés axialement selon une des revendications précédentes.

14. Transmission, notamment transmission intermédiaire dans un véhicule, comportant au moins un palier à roulement (1,11) selon une des revendications 1 à 11.
